(19) Europäisches Patentamt
European Patent Office
Office européen des brevets

(11) **EP 4 632 887 A1**

(12) **EUROPEAN PATENT APPLICATION**
published in accordance with Art. 153(4) EPC

(43) Date of publication:
**15.10.2025 Bulletin 2025/42**

(21) Application number: 23900487.2

(22) Date of filing: **24.11.2023**

(51) International Patent Classification (IPC):
*H01M 50/121* (2021.01)    *H01M 50/105* (2021.01)
*H01M 50/119* (2021.01)    *H01M 50/124* (2021.01)

(52) Cooperative Patent Classification (CPC):
**H01M 50/105; H01M 50/119; H01M 50/121;**
**H01M 50/124**

(86) International application number:
**PCT/JP2023/042261**

(87) International publication number:
**WO 2024/122369 (13.06.2024 Gazette 2024/24)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **06.12.2022 JP 2022194750**

(71) Applicant: Resonac Corporation
**Tokyo 105-7325 (JP)**

(72) Inventors:
• **NISHIZAWA, Shohei**
**Tokyo 105-7325 (JP)**
• **ASOMA, Yuichiro**
**Tokyo 105-7325 (JP)**
• **OKUNO, Yoshishige**
**Tokyo 105-7325 (JP)**
• **KODA, Naoya**
**Tokyo 105-7325 (JP)**

(74) Representative: **Strehl & Partner mbB**
**Maximilianstrasse 54**
**80538 München (DE)**

(54) **LUBRICANT SELECTION SYSTEM, LUBRICANT SELECTION METHOD, LUBRICANT SELECTION PROGRAM, LUBRICANT, AND COMPOSITE**

(57)    A lubricant that suppresses an influence on the battery performance of a lithium-ion battery is selected. A lubricant selection system selects a lubricant to be added to a resin film of a composite material used as an exterior material of a lithium-ion battery. The lubricant selection system includes a first calculation unit configured to calculate a solvation energy between a lubricant candidate and a lithium cation; a second calculation unit configured to calculate a distance between the resin film and the lubricant candidate in an interaction space; and a prediction unit configured to predict a degree of influence of the lubricant candidate on battery performance of the lithium-ion battery based on the solvation energy calculated by the first calculation unit and the distance calculated by the second calculation unit.

EP 4 632 887 A1

# FIG.4

```
            ┌──────────────────────────────┐
            │           START              │
            │   LUBRICANT SELECTION PROCESS │
            └──────────────┬───────────────┘
                           │              S401
            ┌──────────────▼───────────────┐
            │   EXPERIMENT TO DETERMINE DEGREE │
            │      OF INFLUENCE OF CURRENT     │
            │  LUBRICANT ON LITHIUM-ION BATTERY │
            └──────────────┬───────────────┘
                           │              S402
            ┌──────────────▼───────────────┐
            │ EXAMINE HYPOTHESIS ABOUT PHENOMENON │
            └──────────────┬───────────────┘
                           │              S403
            ┌──────────────▼───────────────┐
            │   HYPOTHESIS VERIFICATION PROCESS │
            └──────────────┬───────────────┘
                           │              S404
            ┌──────────────▼───────────────┐
            │        SELECTION PROCESS      │
            └──────────────┬───────────────┘
                           │              S405
            ┌──────────────▼───────────────┐
            │     MEASURE PROPERTY OF        │
            │ COMPOSITE MATERIAL WHEN NEWLY │
            │   SELECTED LUBRICANT IS ADDED │
            └──────────────┬───────────────┘
                           │              S406
                    ◇──────▼──────◇
              NO    IS PREDETERMINED
           ◄───────  CONDITION SATISFIED?
                    ◇─────────────◇
                           │ YES
            ┌──────────────▼───────────────┐
            │           END                 │
            │   LUBRICANT SELECTION PROCESS │
            └──────────────────────────────┘
```

**Description**

TECHNICAL FIELD

The present disclosure relates to a lubricant selection system, a lubricant selection method, a lubricant selection program, a lubricant, and a composite material.

BACKGROUND

Conventionally, a composite material in which aluminum foil and a resin film are bonded is used as an exterior material of a lithium-ion battery. In the composite material, a lubricant is added to the resin film in order to improve moldability and the like.

Related Art Documents

Patent Documents

[Patent Document 1] Japanese Patent Application Laid-Open No. 2018-181667
[Patent Document 2] Japanese Patent Application Laid-Open No. 2021-176131
[Patent Document 3] WO 2016/136640

SUMMARY OF THE INVENTION

Problem to be solved by the invention

Here, in the case of the composite material described above, a phenomenon of an increase in the cell resistance by a lubricant dissolving from the resin film into an electrolyte solution in a battery cell has been reported. Based on this, when the composite material is used as the exterior material of the lithium-ion battery, it is required to add, to the resin film, a lubricant having a small influence on the battery performance.
The present disclosure aims to select a lubricant that suppresses the influence on the battery performance of the lithium-ion battery.

Means for Solving Problem

A first aspect of the present disclosure is a lubricant selection system for selecting a lubricant to be added to a resin film of a composite material used as an exterior material of a lithium-ion battery. The lubricant selection system includes:

a first calculation unit configured to calculate a solvation energy between a lubricant candidate and a lithium cation;
a second calculation unit configured to calculate a distance between the resin film and the lubricant candidate in an interaction space; and
a prediction unit configured to predict a degree of influence of the lubricant candidate on battery performance of the lithium-ion battery based on the solvation energy calculated by the first calculation unit and the distance calculated by the second calculation unit.

A second aspect of the present disclosure is the lubricant selection system described the first aspect, wherein the prediction unit predicts the influence of the lubricant candidate on the battery performance of the lithium-ion battery by using an estimation equation derived based on the degree of influence on the battery performance of the lithium-ion battery measured in a state in which each of a plurality of lubricants dissolves into an electrolyte of the lithium-ion battery, the solvation energy between each of the plurality of lubricants and the lithium cation, and the distance in the interaction space between the resin film and each of the plurality of lubricants.
A third aspect of the present disclosure is the lubricant selection system as described in the second aspect, wherein the prediction unit predicts the influence of the lubricant candidate on the battery performance of the lithium-ion battery by inputting, into the estimation equation, the solvation energy calculated by the first calculation unit and the distance calculated by the second calculation unit.
A fourth aspect of the present disclosure is the lubricant selection system as described in the third aspect, wherein the estimation equation predicts the degree of influence of the lubricant candidate on the battery performance of the lithium-ion battery by performing a weighted sum of the solvation energy calculated by the first calculation unit and the distance calculated by the second calculation unit.

A fifth aspect of the present disclosure is the lubricant selection system as described in any of the first to fourth aspects, wherein the second calculation unit calculates the distance between the resin film and the lubricant candidate in the interaction space defined by a van der Waals force interaction, a molecular polarity interaction, and a hydrogen bond interaction.

A sixth aspect of the present disclosure is the lubricant selection system as described in any of the second to fourth aspects, wherein the electrolyte contains one of ethylene carbon or ethyl methyl carbon, or more, as an electrolyte molecule.

A seventh aspect of the present disclosure is the lubricant selection system as described in any one of first to sixth aspects, wherein the prediction unit predicts a cell resistance value as the battery performance of the lithium-ion battery for each of a plurality of lubricant candidates.

An eighth aspect of the present disclosure is the lubricant selection system as described in the seventh aspect, further comprising a selection unit configured to select a lubricant candidate having a smallest cell resistance value from the cell resistance value predicted by the prediction unit for each of the plurality of lubricant candidates.

A ninth aspect of the present disclosure is a lubricant selection method for selecting a lubricant to be added to a resin film of a composite material used as an exterior material of a lithium-ion battery. The lubricant selection method includes:

> a first calculation step of calculating, by a computer, a solvation energy between a lubricant candidate and a lithium cation;
> a second calculation step of calculating, by the computer, a distance between the resin film and the lubricant candidate in an interaction space; and
> a prediction step of predicting, by the computer, a degree of influence of the lubricant candidate on battery performance of the lithium-ion battery based on the solvation energy calculated by the first calculation step and the distance calculated by the second calculation step.

A tenth aspect of the present disclosure is a lubricant selection program causing a computer of a selection device configured to select a lubricant to be added to a resin film of a composite material used as an exterior material of a lithium-ion battery to perform:

> a first calculation step of calculating a solvation energy between a lubricant candidate and a lithium cation;
> a second calculation step of calculating a distance between the resin film and the lubricant candidate in an interaction space; and
> a prediction step of predicting a degree of influence of the lubricant candidate on battery performance of the lithium-ion battery based on the solvation energy calculated by the first calculation step and the distance calculated by the second calculation step.

An eleventh aspect of the present disclosure is the lubricant selected by the lubricant selection system as described in any one of first to eighth aspects, and added to the resin film in the composite material in which aluminum foil and the resin film are bonded.

A twelfth aspect of the present disclosure is the composite material in which the resin film to which the lubricant described in the eleventh aspect is added and the aluminum foil are bonded.

Effect of the invention

According to the present disclosure, a lubricant that suppresses the influence on the battery performance of a lithium-ion battery can be selected.

BRIEF DESCRIPTION OF THE DRAWINGS

[FIG. 1] FIG. 1 is a diagram illustrating an application example of a composite material.
[FIG. 2] FIG. 2 is a diagram illustrating an example of a system configuration of a lubricant selection system.
[FIG. 3] FIG. 3 is a diagram illustrating an example of hardware configurations of a verification device and a lubricant selection device.

[FIG. 4] FIG. 4 is a flowchart illustrating a flow of a lubricant selection process.

[FIG. 5] FIG. 5 is a diagram illustrating a structure example of a lithium-ion battery.

[FIG. 6] FIG. 6 is a graph illustrating a degree of influence of a lubricant on the battery performance of the lithium-ion battery.

[FIG. 7] FIG. 7 is a diagram schematically illustrating a relationship between an electrolyte and the lubricant.

[FIG. 8] FIG. 8 is a diagram illustrating an example of a functional configuration of a verification unit.

[FIG. 9] FIG. 9 is a diagram illustrating a specific example of a process of a solvation calculation unit.

[FIG. 10] FIG. 10 illustrates a specific example of a process of a molecular dynamics calculation unit.

[FIG. 11] FIG. 11 is a diagram illustrating an example of a functional configuration of an estimation equation derivation unit.

[FIG. 12A] FIG. 12A is a flowchart illustrating a flow of a hypothesis verification process.

[FIG. 12B] FIG. 12B is a flowchart illustrating flows of a solvation calculation process and a distance calculation process.

[FIG. 13] FIG. 13 is a diagram illustrating an example of a functional configuration of a selection unit.

[FIG. 14] FIG. 14 is a flowchart illustrating a flow of a selection process.

[FIG. 15] FIG. 15 is a diagram for explaining a process after selection.

DESCRIPTION OF EMBODIMENTS

In the following, each embodiment will be described with reference to the accompanying drawings. Here, in the present specification and the drawings, components having substantially the same functional configuration will be denoted by the same reference numerals and thus duplicate descriptions will be omitted.

[First Embodiment]

<Application Example of Composite Material>

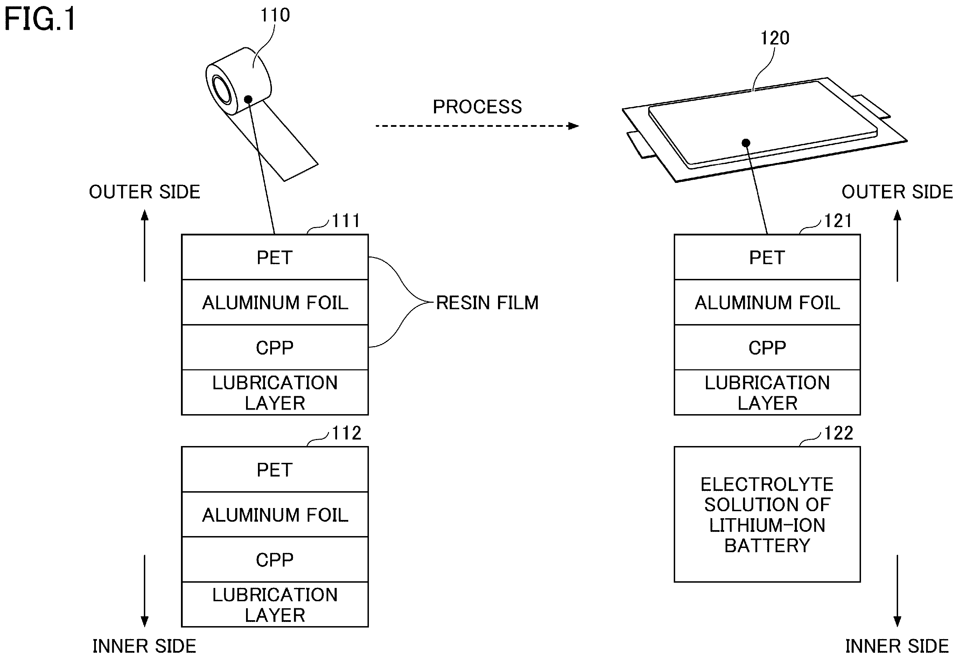

First, an application example of a composite material to which a lubricant selected by a lubricant selection system according to a first embodiment is added will be described. FIG. 1 is a diagram illustrating the application example of the composite material.

As illustrated in FIG. 1, a composite material 110 is formed by bonding aluminum foil and a resin film.

Specifically, as indicated by reference numeral 111, the resin film contains polyethylene terephthalate (PET) and non-stretched polypropylene (CPP), and PET is bonded as the outer layer of the aluminum foil and CPP is bonded as the inner layer.

Additionally, a lubricant is added to the CPP, and the lubricant bled out of the CPP forms a lubricant layer on the inner side of the CPP. Therefore, as illustrated in FIG. 1, when the composite material 110 is wound in a roll shape, the lubricant layer formed on the inner side of the CPP comes into contact with the PET (PET with reference numeral 112) located further inner side of the CPP. As a result, the lubricant layer formed on the inner side of the CPP reduces the coefficient of friction between the CPP with reference numeral 111 and the PET with reference numeral 112.

The composite material 110 having the above-described structure has the following properties:

- a high degree of freedom in moldability;
- lightweight;
- excellent in heat dissipation;
- excellent in insulation; and
- excellent in moldability.

Additionally, as illustrated in FIG. 1, the composite material 110 is processed into a predetermined shape and used as an exterior material 120 of a lithium-ion battery.

As indicated by reference numeral 121, when the composite material 110 is used as the exterior material 120 of the lithium-ion battery, the lubricant that is bled out of the CPP and that forms the lubricant layer on the inner side of the CPP comes into contact with an electrolyte (reference numeral 122) of the lithium-ion battery. Therefore, the lubricant that forms the lubricant layer dissolves into the electrolyte (reference numeral 122).

Based on this, the lubricant to be added to the CPP is required to be a lubricant that minimizes the influence on the battery performance of the lithium-ion battery even if it dissolves into the electrolyte (reference numeral 122). Therefore, in the following description of the present embodiment, a system (a lubricant selection system) configured to select, as a lubricant to be added to the CPP, a lubricant that minimizes the influence on the battery performance of the lithium-ion battery will be described.

<System Configuration of Lubricant Selection System>

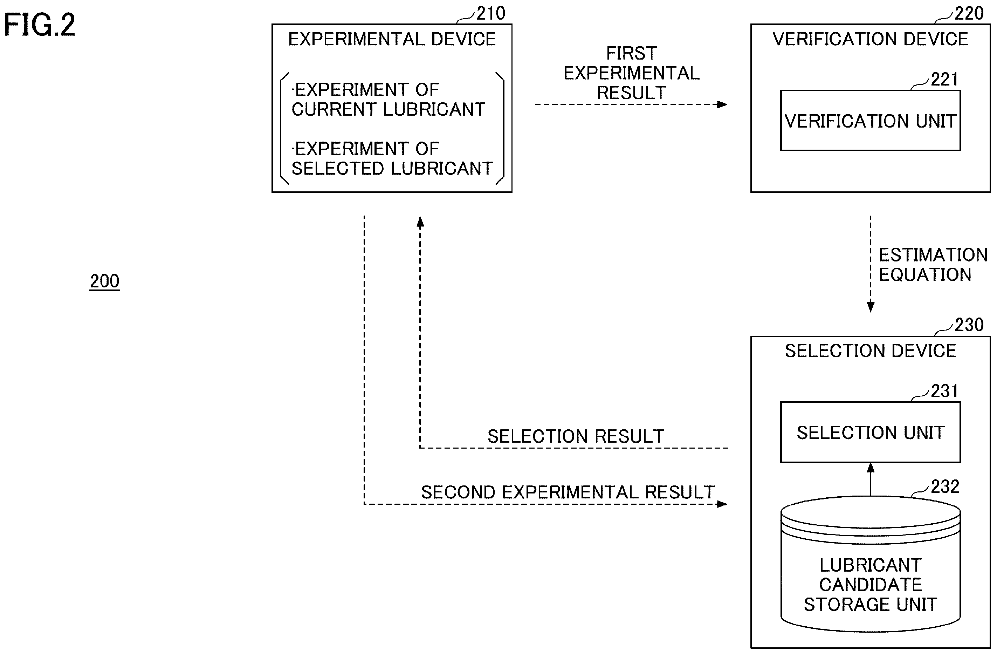

First, a system configuration of the lubricant selection system will be described. FIG. 2 is a diagram illustrating an example of the system configuration of the lubricant selection system. As illustrated in FIG. 2, a lubricant selection system 200 includes an experimental device 210, a verification device 220, and a selection device 230. The verification device 220 and the selection device 230 may be connected through a communication network, such as a local area network (LAN) or the Internet, so that data communication can be performed. Additionally, the verification device 220 and the selection device 230 may be connected to the experimental device 210 through a communication network, such as a local area network (LAN) or the Internet to the extent necessary, so that data communication can be performed.

Among these, the experimental device 210 is used when an experimenter, which is not illustrated, performs an experiment to measure the degree of influence of the current lubricant on the battery performance of the lithium-ion battery, an experiment to measure a property of a composite material when a newly selected lubricant is added to CPP, or the like.

Here, the degree of influence of the current lubricant on the battery performance of the lithium-ion battery measured using the experimental device 210 is notified to the verification device 220 as a first experiment result. Additionally, the property of the composite material, measured using the experimental device 210 when the newly selected lubricant is added to the CPP, is notified to the selection device 230 as a second experimental result.

A verification program is installed in the verification device 220, and the verification device 220 functions as a verification unit 221 by executing the program.

Here, when the verification device 220 functions as the verification unit 221, a verifier, which is not illustrated, forms a hypothesis about a phenomenon occurring in the lithium-ion battery based on the first experimental result notified from the experimental device 210.

The verification unit 221 performs a process for verifying the hypothesis formed by the verifier. Additionally, based on the verification result, the verification unit 221 derives an estimation equation for selecting a lubricant that suppresses the influence on the battery performance of the lithium-ion battery, and stores the derived estimation equation in the selection device 230.

A lubricant selection program is installed in the selection device 230, and the selection device 230 functions as a selection unit 231 by executing the program.

The selection unit 231 reads a plurality of lubricant candidates designated by a selector, which is not illustrated, and stored in advance in a lubricant candidate storage unit 232. Additionally, the selection unit 231 selects a lubricant candidate that suppresses the influence on the battery performance of the lithium-ion battery from among the plurality of read lubricant candidates, by using the derived estimation equation.

Additionally, the selection unit 231 notifies the experimental device 210 of the selected lubricant candidate as a newly selected lubricant (a selection result). Additionally, in response to the notification of the selection result, the selection unit 231 acquires the property of the composite material when the newly selected lubricant is added to the CPP, measured in the experimental device 210, as the second experimental result.

With this, the selection unit 231 can select a lubricant that suppresses the influence on the battery performance of the lithium-ion battery and that achieves the desired property of the composite material.

<Hardware Configuration of Verification Device and Selection Device>

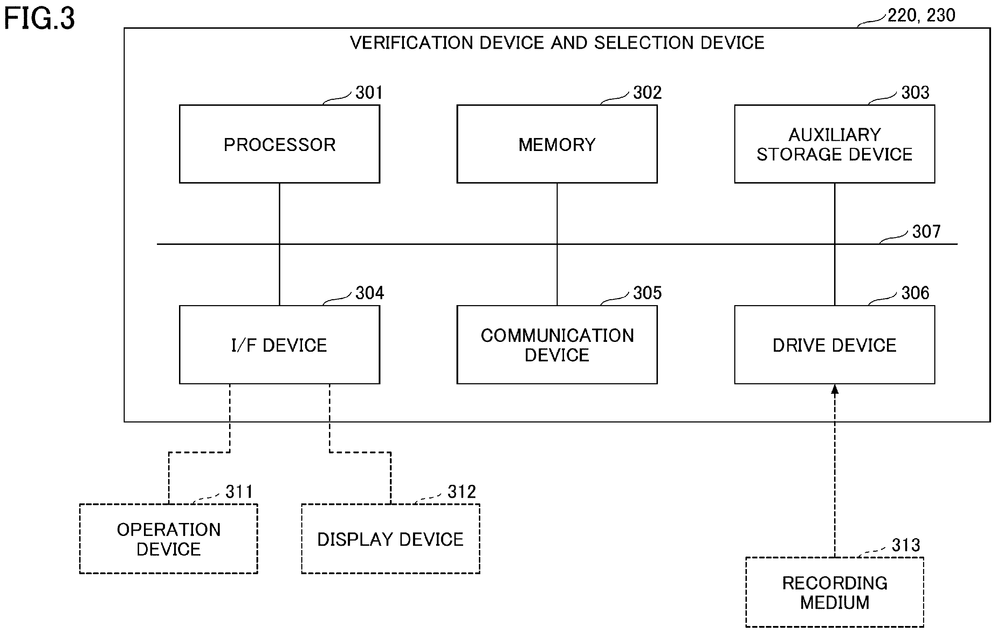

Next, hardware configurations of the verification device 220 and the selection device 230 will be described. Here, the hardware configuration of the verification device 220 and the hardware configuration of the selection device 230 are generally the same, and thus the hardware configurations will be described together with reference to FIG. 3.

FIG. 3 is a diagram illustrating an example of the hardware configurations of the verification device and the selection device. As illustrated in FIG. 3, the verification device 220 and the selection device 230 include a processor 301, a memory 302, an auxiliary storage device 303, an interface (I/F) device 304, a communication device 305, and a drive device 306. Here, the respective hardware components of the verification device 220 and the selection device 230 are connected to each other via a bus 307.

The processor 301 includes various computation devices, such as a central processing unit (CPU) and a graphics processing unit (GPU). The processor 301 reads various programs (for example, the verification program, the lubricant selection program, and the like) on the memory 302 and executes the programs.

The memory 302 includes a main storage device, such as a read only memory (ROM) and a random access memory (RAM). The processor 301 and the memory 302 form what is called a computer, and the computer realizes various functions by the processor 301 executing various programs read on the memory 302.

The auxiliary storage device 303 stores various programs and various data used when the various programs are executed by the processor 301. For example, the lubricant candidate storage unit 232 is realized in the auxiliary storage device 303.

The I/F device 304 is a connection device for connecting to an operation device 311 and a display device 312, which are examples of a user interface device. The communication device 305 is a communication device for communicating with an external device (not illustrated) via a network, which is not illustrated.

The drive device 306 is a device for setting a recording medium 313. The recording medium 313 includes a medium for recording information optically, electrically, or magnetically, such as a CD-ROM, a flexible disk, a magneto-optical disk, or the like. Additionally, the recording medium 313 may include a semiconductor memory or the like for recording information electrically, such as a ROM, a flash memory, or the like.

Here, various programs installed in the auxiliary storage device 303 are installed, for example, when the distributed recording medium 313 is set in the drive device 306 and various programs recorded in the recording medium 313 are read by the drive device 306. Alternatively, various programs installed in the auxiliary storage device 303 may be installed by downloading them from the network via the communication device 305.

<Flow of Lubricant Selection Process>

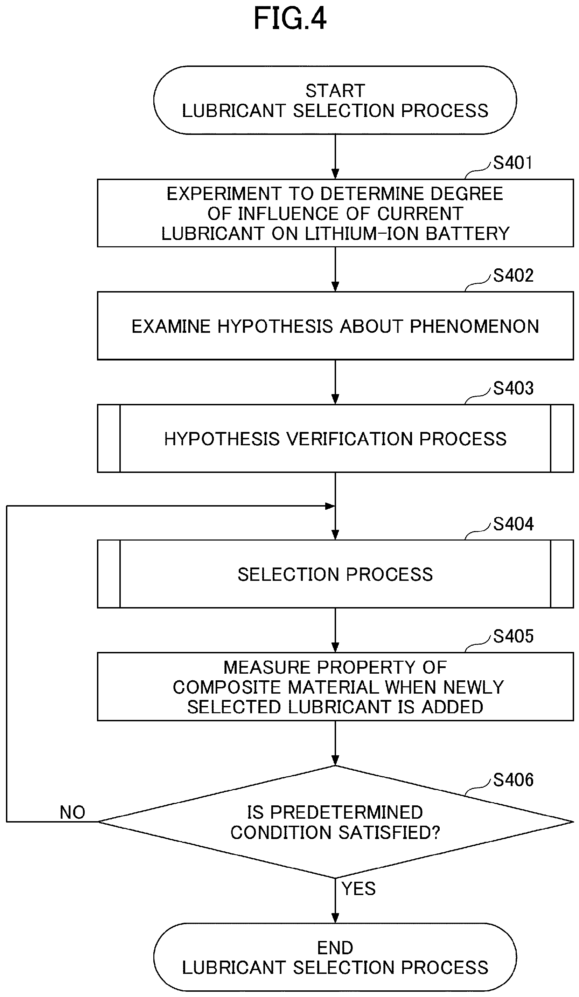

Next, an entire flow of a lubricant selection process performed by the lubricant selection system 200 will be described. FIG. 4 is a flowchart illustrating the flow of the lubricant selection process.

In step S401, the experimenter uses the experimental device 210 to measure the degree of influence of the current lubricant on the battery performance of the lithium-ion battery.

In step S402, the verifier forms a hypothesis about a phenomenon occurring in the lithium-ion battery from the measured degree of influence.

In step S403, the verifier uses the verification device 220 to perform a hypothesis verification process to verify the hypothesis. Here, the hypothesis verification process will be described in detail later.

In step S404, the selector designates a plurality of lubricant candidates. With this, the selection device 230 performs a selection process to select a lubricant candidate from among the plurality of designated lubricant candidates, using the estimation equation derived in the hypothesis verification process (step S403). Here, the selection process will be described in detail later.

In step S405, the experimenter uses the experimental device 210 to measure the property of the composite material when the newly selected lubricant is added to the CPP.

In step S406, the selector determines whether the measured property satisfy a predetermined condition. If it is determined that the measured property does not satisfy the predetermined condition (NO in step S406), the process returns to step S404.

If it is determined that the measured property satisfies the predetermined condition (YES in step S406), the lubricant selection process ends.

<Structure of Li-ion Battery>

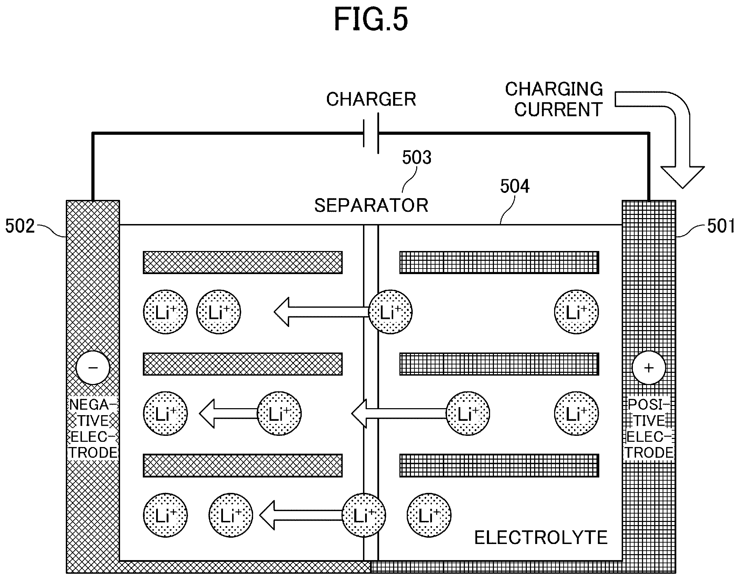

Next, a cross-sectional structure of the lithium-ion battery in which the composite material is used as the exterior material will be described. FIG. 5 is a diagram illustrating a structure example of the lithium-ion battery. As illustrated in FIG. 5, the lithium-ion battery includes a positive electrode 501, a negative electrode 502, a separator 503 separating the positive electrode 501 and the negative electrode 502, and an electrolyte 504. Each of the positive electrode 501 and the negative electrode 502 can store Li+ (lithium cation), and can store and use energy by the Li+ (lithium cation) moving from the positive electrode 501 to the negative electrode 502 through the electrolyte 504.

Here, in the case of storing energy, the Li+ (lithium cation) on the positive electrode 501 side moves to the negative electrode 502 side through the electrolyte 504 by applying a current with a charger. Then, a potential difference between the positive electrode 501 and the negative electrode 502 is generated, and the battery is charged.

In the case of using energy, the Li+ (lithium cation) stored in the negative electrode 502 moves toward the positive electrode in a discharge circuit connecting the positive electrode 501 to the negative electrode 502, and energy is used.

<Influence of Lubricant on Battery Performance of Lithium-ion Battery>

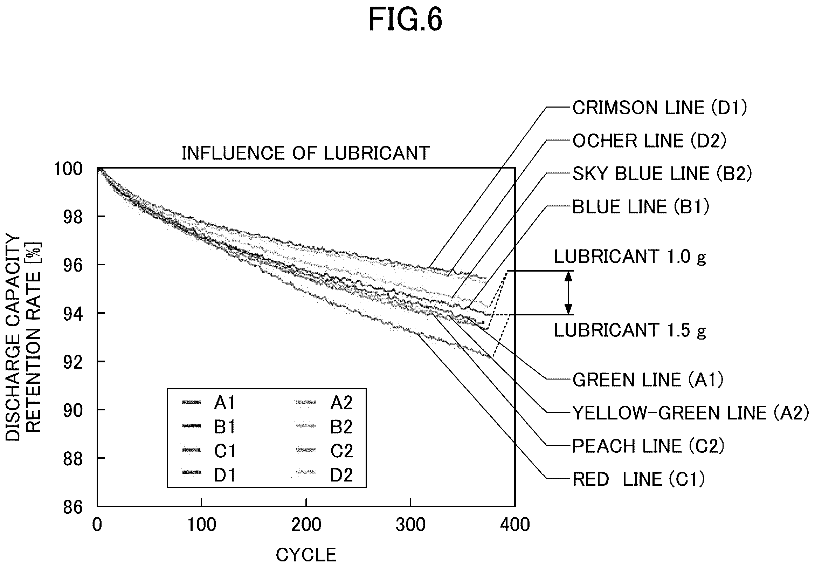

Next, the influence of lubricant dissolving into the electrolyte 504 on the battery performance of the lithium-ion battery will be described. FIG. 6 is a graph illustrating the influence of lubricant on the battery performance of the lithium-ion battery. In FIG. 6, the horizontal axis represents the test cycle in which the lithium-ion battery is repeatedly charged and discharged, and the vertical axis represents the discharge capacity retention rate in each cycle.

Additionally, in FIG. 6, a green line (A1), a blue line (B1), a red line (C1), and a crimson line (D1) indicate the discharge capacity retention rate in each cycle when 1.5 g of lubricant is added to the CPP with respect to different types of lithium-ion batteries.

Similarly, in FIG. 6, a yellow-green line (A2), a sky blue line (B2), a peach line (C2), and an ocher line (D2) indicate the discharge capacity retention rate in each cycle when 1.0 g of lubricant is added to the CPP with respect to different types of lithium-ion batteries.

Here, in FIG. 6, the green line (A1) and the yellow-green line (A2) are the same type of lithium-ion batteries, but the amount of lubricant added to the CPP is different (the former is 1.5 g, the latter is 1.0 g). Similarly, the blue line (B1) and the sky blue line (B2) are the same type of lithium-ion batteries, but the amount of lubricant added to the CPP is different (the former is 1.5 g, the latter is 1.0 g). Similarly, the red line (C1) and the peach line (C2) are the same type of lithium-ion batteries, but the amount of lubricant added to the CPP is different (the former is 1.5 g, the latter is 1.0 g). Similarly, the crimson line (D1) and the ocher line (D2) are the same type of lithium-ion batteries, but the amount of lubricant added to the CPP is different (the former is 1.5 g, the latter is 1.0 g).

As illustrated in FIG. 6, with respect to reference numerals A1 and A2, and for reference numerals D1 and D2, the discharge capacity retention rate is substantially the same regardless of the amount of lubricant. As illustrated in FIG. 6, with respect to reference numerals B1 and B2, and for reference numerals C1 and C2, as the amount of added lubricant increases, the discharge capacity retention rate decreases, and it is found that the influence of lubricant on the battery performance of the lithium-ion battery is significant.

<Relationship between Electrolyte and Lubricant>

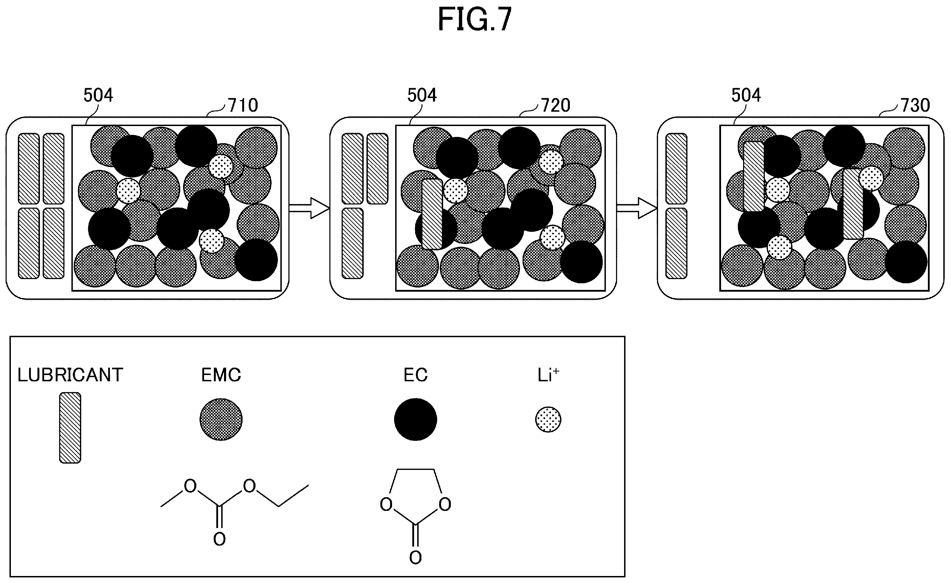

Next, a relationship between the electrolyte 504 of the lithium-ion battery and the lubricant dissolved into the electrolyte 504 will be described. FIG. 7 schematically illustrates the relationship between the electrolyte and the lubricant.

As illustrated in FIG. 7, the electrolyte 504 contains, for example, ethyl methyl carbon (EMC) and ethylene carbon (EC) as electrolyte molecules, and Li+ (lithium cation) moves in the electrolyte 504.

In FIG. 7, reference numeral 710 schematically illustrates a state before the lubricant forming the lubricant layer on the inner side of the CPP dissolves into the electrolyte 504. In the state before the lubricant dissolves into the electrolyte 504, Li+ (lithium cation) can move freely in the electrolyte 504.

With respect to the above, in FIG. 7, reference numeral 720 schematically illustrates a state after the lubricant forming the lubricant layer on the inner side of the CPP has dissolved into the electrolyte 504.

As indicated by reference numeral 720, the lubricant dissolved into the electrolyte 504 may take in Li+ (lithium cation) in the electrolyte 504 and become a solvation state. That is, the amount of Li+ (lithium cation) that can move freely in the electrolyte 504 may decrease. Alternatively, even Li+ (lithium cation) that is not taken in may be prevented from moving freely in the electrolyte 504 by the lubricant dissolved into the electrolyte 504. That is, the movement amount of Li+ (lithium cation) that can move in the electrolyte 504 may decrease.

Similarly, reference numeral 730 schematically illustrates a state after the lubricant formed in the lubricant layer on the inner side of the CPP is further dissolved into the electrolyte 504.

As indicated by reference numeral 730, if the amount of the lubricant dissolved into the electrolyte 504 increases, the amount of Li+ (lithium cation) that can freely move in the electrolyte 504 may further decrease. Alternatively, the movement amount of Li+ (lithium cation) that can move in the electrolyte 504 may further decrease.

Therefore, in the following, a hypothesis based on the relationship between the electrolyte and the lubricant will be established and verified with respect to the above phenomenon (the phenomenon that the discharge capacity retention rate decreases as the amount of lubricant added to the CPP increases).

<Hypothesis on Phenomenon>

As described above, the occurrence of the phenomenon that the discharge capacity retention rate decreases by the lubricant dissolving into the electrolyte 504 indicates that the amount and the movement amount of Li+ (lithium cation) that can move between the electrodes in the electrolyte 504 may decrease.

Thus, with respect to the phenomenon that the lubricant dissolved in the electrolyte 504 reduces the amount and the movement amount of Li+ (lithium cation) that can move, the applicant has formed the following hypotheses.

· Hypothesis 1: the lubricant dissolved in the electrolyte is more likely to take in Li+ (lithium cation) (is more likely to become a solvation state) than the electrolyte molecule (EMC and EC) contained in the electrolyte.

· Hypothesis 2: the lubricant dissolved in the electrolyte reduces the diffusivity of Li+ (lithium cation) in the electrolyte.

<Functional Configuration of Verification Device>

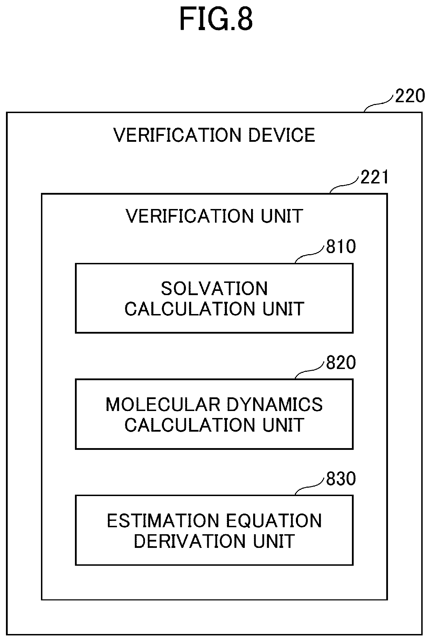

Next, a functional configuration of the verification unit 221 of the verification device 220 for verifying Hypotheses 1 and 2 described above will be described. FIG. 8 is a diagram illustrating an example of the functional configuration of the verification unit. As illustrated in FIG. 8, the verification unit 221 includes a solvation calculation unit 810, a molecular dynamics calculation unit 820, and an estimation equation derivation unit 830.

The solvation calculation unit 810 calculates the solvation energy to verify Hypothesis 1. As described above, Hypothesis 1 assumes that the lubricant dissolved into the electrolyte solution is more likely to take in Li+ (lithium cation) (is more likely to become a solvation state) than the electrolyte molecule (EMC and EC) contained in the electrolyte solution. Thus, the solvation calculation unit 810 calculates the solvation energy to verify that the lubricant is more likely to take in Li+ (lithium cation) than the electrolyte molecule (EMC and EC) (the solvation energy is greater).

The molecular dynamics calculation unit 820 performs a molecular dynamics simulation to verify Hypothesis 2. As described above, Hypothesis 2 assumes that the lubricant dissolved into the electrolyte solution reduces the diffusivity of Li+ (lithium cation) in the electrolyte solution. Thus, the molecular dynamics calculation unit 820 simulates the movement of each molecule in the electrolyte solution, compares the diffusivity of Li+ (lithium cation) in the presence of the lubricant with that in the absence of the lubricant, and verifies that the diffusivity is reduced in the presence of the lubricant.

Based on the verification results of Hypothesis 1 and Hypothesis 2, the estimation equation derivation unit 830 identifies the property of the lubricant required to prevent the amount and the movement amount of Li+ (lithium cation) that can move between the electrodes in the electrolyte solution from being reduced, and derives an estimation equation for evaluating the property of the lubricant. By the estimation equation derivation unit 830 deriving the estimation equation, the selection device 230 can select an appropriate lubricant candidate from the property of each of the lubricant candidates evaluated based on the estimation equation.

<Specific Example of Process by Solvation Calculation Unit>

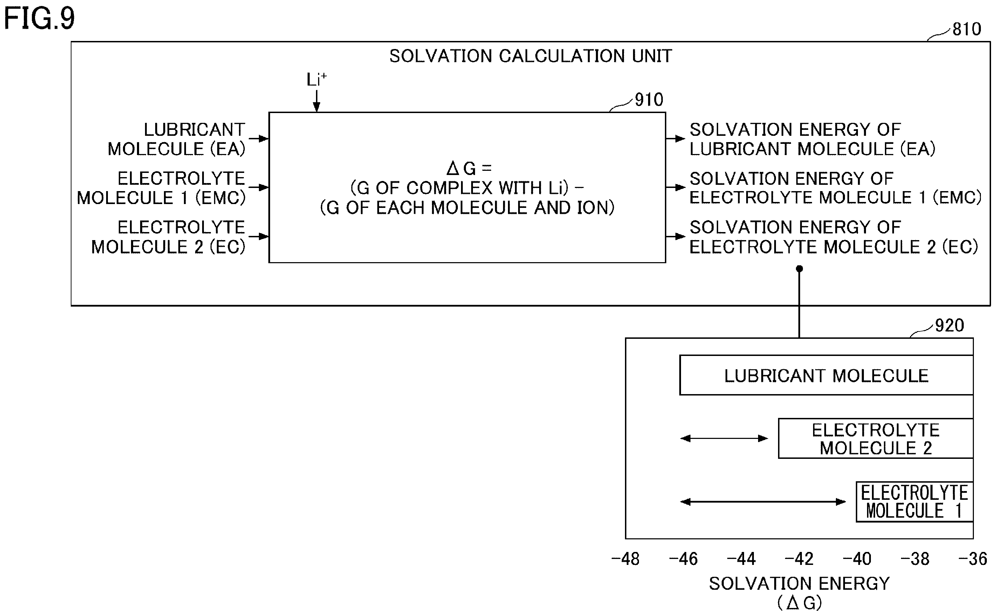

Next, a specific example of a process by the solvation calculation unit 810 of the verification unit 221 will be described. FIG. 9 is a diagram illustrating the specific example of the process by the solvation calculation unit.

As illustrated in FIG. 9, the solvation calculation unit 810 calculates the solvation energy based on an equation indicated by reference numeral 910. The example illustrated in FIG. 9 illustrates a state in which the solvation energy when the lubricant molecule is "EA" (erucic acid amide) and the solvation energy when the electrolyte molecule is each of "EMC" and "EC" are calculated based on the following equation 1.

[Equation 1]

$$\text{SOLVATION ENERGY } \Delta G = (\text{G OF COMPLEX WITH Li}) - (\text{G OF EACH MOLECULE AND ION}) \quad \cdots (\text{EQUATION 1})$$

Specifically, the solvation energy $\Delta G$ when the lubricant molecule is "EA" (erucic acid amide) is calculated based on a difference between:

• "G of the complex with Li" = Gibbs energy in a state in which lubricant molecule "EA" (erucic acid amide) takes in Li+ (lithium cation); and
• "G of each molecule and ion" = Gibbs energy of lubricant molecule "EA" (erucic acid amide) and Gibbs energy of Li+ (lithium cation) in a state in which lubricant molecule "EA" (erucic acid amide) and Li+ (lithium cation) are in a separate state.

Similarly, the solvation energy $\Delta G$ when the electrolyte molecule is "EMC" is calculated based on a difference between:

• "G of the complex with Li" = Gibbs energy in a state in which the electrolyte molecule "EMC" takes in Li+ (lithium cation); and
· "G of each molecule and ion" = Gibbs energy of the electrolyte molecule "EMC" and the Gibbs energy of Li+ (lithium cation) in a state in which the electrolyte molecule "EMC" and Li+ (lithium cation) are in a separate state.

Similarly, the solvation energy $\Delta G$ when the electrolyte molecule is "EC" is calculated based on a difference between:

• "G of complex with Li" = Gibbs energy in a state in which the electrolyte molecule "EC" takes in Li+ (lithium cation); and
• "G of each molecule and ion" = Gibbs energy of the electrolyte molecule "EC" and Gibbs energy of Li+ (lithium cation) in a state in which electrolyte molecule "EC" and Li+ (lithium cation) are in a separate state.

According to reference numeral 920, the solvation energy $\Delta G$ is in the order of: lubricant molecule "EA" > electrolyte molecule "EMC" > electrolyte molecule "EC". Therefore, it can be said that lubricant molecule "EA" dissolved in the electrolyte solution is more likely to take in Li+ (lithium cation) than electrolyte molecules "EMC" and "EC" contained in the electrolyte solution.

That is, Hypothesis 1 described above has been verified to be correct. Therefore, it is found that, in the electrolyte solution of the lithium-ion battery, the amount of Li+ (lithium cation) that can move freely in the electrolyte solution decreases by the lubricant taking in Li+ (lithium ion).

<Specific Example of Process of Molecular Dynamics Calculation Unit>

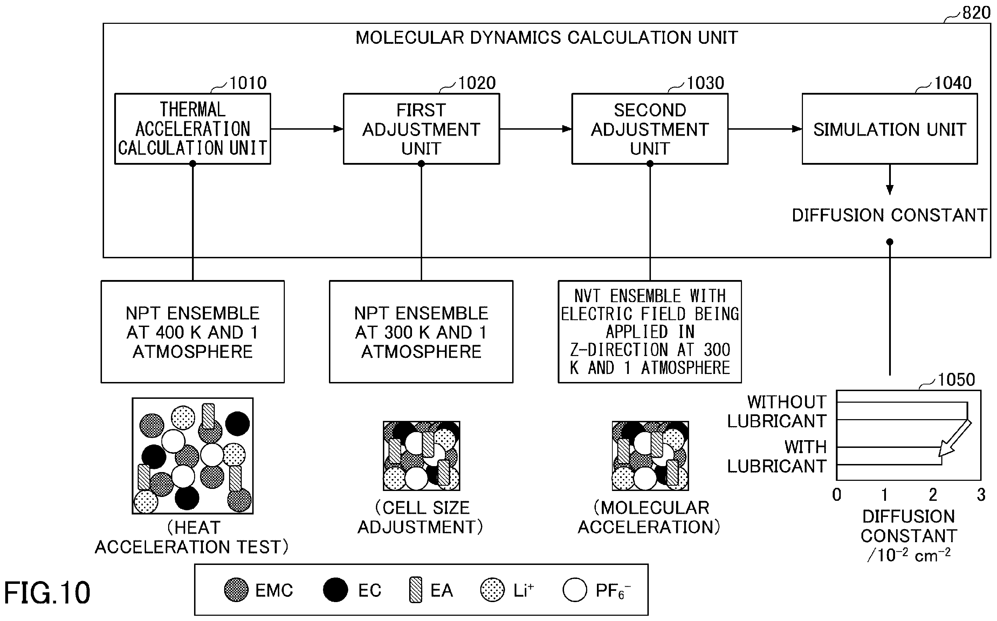

Next, a specific example of a process of the molecular dynamics calculation unit 820 of the verification unit 221 will be described. FIG. 10 is a diagram illustrating the specific example of the process of the molecular dynamics calculation unit.

As illustrated in FIG. 10, the molecular dynamics calculation unit 820 further includes a thermal acceleration calculation unit 1010, a first adjustment unit 1020, a second adjustment unit 1030, and a simulation unit 1040.

The thermal acceleration calculation unit 1010 causes molecules to move under a predetermined cell size in a state in which the number of molecules in the cell, the pressure (1 atm), and the temperature (400 K) are constant. With this, when performing the molecular dynamics simulation, the thermal acceleration calculation unit 1010 causes molecules in the cell to be distributed in a natural state (low energy state) without distortion.

The first adjustment unit 1020 causes molecules to move and adjusts the cell size in a state in which the number of molecules in the cell, the pressure (1 atm), and the temperature (300 K) are constant. With this the first adjustment unit 1020 makes the inside of the cell close to the actual condition when performing the molecular dynamics simulation.

The second adjustment unit 1030 causes molecules to move in a state in which the number of molecules in the cell, the cell size, and the temperature (300 K) are constant while an electric field is applied in the z direction. With this, the second adjustment unit 1030 can move Li+ (lithium cation) in the cell faster (As the Li+ (lithium cation) moves faster, the difference in the calculated diffusion constants can be more distinct).

The simulation unit 1040 performs the molecular dynamics simulation and calculates the diffusion constant of Li+ (lithium cation).

Here, the thermal acceleration calculation unit 1010 to the simulation unit 1040 perform the processes in the following cases:

· a case where the electrolyte molecule (EMC and EC), Li+ (lithium cation), and PF6-(hexafluorophosphate ion) are contained (that is, without lubricant); and
· a case where the electrolyte molecules (EMC and EC), the lubricant molecule (EA), Li+ (lithium cation), and PF6-(hexafluorophosphate ion) are contained (that is, with lubricant),

and output the diffusion constant of Li+ (lithium cation).

As indicated by reference numeral 1050 in Fig. 10, the diffusion constant of Li+ (lithium cation) is in the order of: without lubricant > with lubricant. Therefore, it can be said that the diffusivity of Li+ (lithium cation) in the electrolyte decreases by the lubricant dissolving into the electrolyte.

That is, Hypothesis 2 described above has been verified to be correct. Therefore, it is found that, in the electrolyte of the lithium-ion battery, the movement amount of Li+ (lithium cation) that can move in the electrolyte decreased by the lubricant preventing Li+ (lithium cation) from moving freely in the electrolyte .

<Specific Example of Process of Estimation Equation Derivation Unit >

As described above, Hypotheses 1 and 2 are correct. Therefore, in order to suppress the influence of the lubricant dissolving into the electrolyte 504 on the battery performance of the lithium-ion battery, it can be said that the property required for a lubricant is as follows:

•· the solvation energy is small in comparison with the electrolyte molecule (EMC and EC); and
· the diffusivity of Li+ (lithium cation) is not lowered.

In order to prevent the diffusivity of Li+ (lithium cation) from being lowered, it is important to reduce the amount of lubricant dissolved into the electrolyte 504. In other words, it is important to reduce the amount of lubricant bled out of the CPP.

Here, the amount of lubricant bled out of the CPP is determined by how similar the CPP and the lubricant are from the viewpoint of interaction. If the properties of interaction are similar, it can be said that both are easily mixed, and the lubricant is difficult to bleed out of CPP. If the properties of interaction are not similar, it can be said that both are not easily mixed, and the lubricant is easily bled out of the CPP.

Here, whether the properties of interaction are similar can be determined by calculating the Hansen's solubility parameter and calculating the distance in the interaction space. Specifically, the Hansen's solubility parameter includes:

- the van der Waals force interaction;
- the molecular polarity interaction; and
- the hydrogen bond interaction.

It is determined by calculating the distance between the CPP and the lubricant (referred to as the HSPiP distance) in the interaction space defined by the above three interactions.

That is, in order to suppress the influence of the lubricant dissolving into the electrolyte 504 on the battery performance of the lithium-ion battery, it can be said that the property required for a lubricant is as follows:

- the solvation energy is small in comparison with the electrolyte molecule (EMC and EC); and
- the HSPiP distance between the lubricant and the CPP is distant.

Thus, the estimation equation derivation unit 830 according to the present embodiment uses:

· the solvation energy; and
· the HSPiP distance,

as indices indicating the degree of influence of the lubricant dissolving into the electrolyte 504 on the battery performance of the lithium-ion battery. Additionally, the estimation equation derivation unit 830 according to the present embodiment uses
· the cell resistance
as the battery performance of the lithium-ion battery influenced by the lubricant dissolving in the electrolyte 504 (substituted with the cell resistance, which is easier to measure than the discharge capacity retention rate).

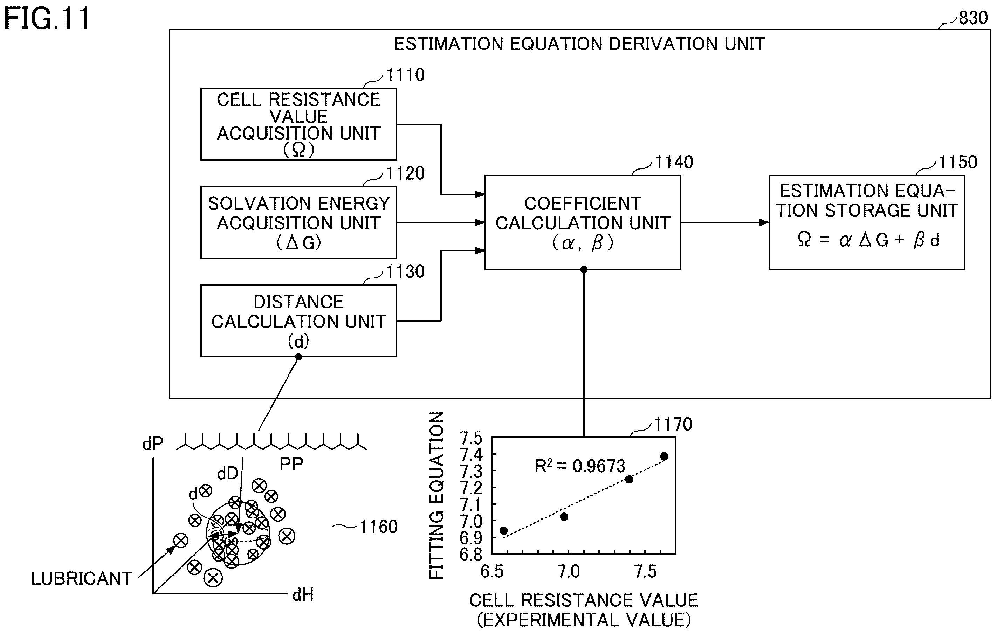

FIG. 11 illustrates an example of a functional configuration of the estimation equation derivation unit. As illustrated in FIG. 11, the estimation equation derivation unit 830 includes a cell resistance value acquisition unit 1110, a solvation energy acquisition unit 1120, a distance calculation unit 1130, a coefficient calculation unit 1140, and an estimation equation storage unit 1150.

The cell resistance value acquisition unit 1110 acquires experimental values (known cell resistance values) of cell resistance values measured when various types of lubricants dissolve into the electrolyte 504.

The solvation energy acquisition unit 1120 acquires calculation results of solvation energies of various types of lubricants. Here, it is assumed that the solvation energies of various types of lubricants are calculated in advance by using the solvation calculation unit 810, for example.

The distance calculation unit 1130 calculates HSPiP distances between the CPP and various types of lubricants. Here, in FIG. 11, reference numeral 1160 represents the solubility parameter of Hansen for PP (polypropylene) in the interaction space and the solubility parameter of Hansen for various types of lubricants in the interaction space. Additionally, in the interaction space (reference numeral 1160):

• dD represents the van der Waals force interaction;
· dP represents the molecular polarity interaction; and
· dH represents the hydrogen bond interaction. Further, d represents the HSPiP distance.

The coefficient calculation unit 1140 calculates, by least square fitting, weight coefficients $\alpha$ and $\beta$ when it is assumed that the cell resistance values of various types of lubricants obtained by the cell resistance value acquisition unit 1110 are calculated by performing a weighted sum of:

- the solvation energies of various types of lubricants, acquired by the solvation energy acquisition unit 1120; and
- the HSPiP distances between the CPP and various types of lubricants, calculated by the distance calculation unit 1130.

In FIG. 11, reference numeral 1170 indicates a state in which the weight coefficients $\alpha$ and $\beta$ are calculated using the cell resistance values, the solvation energies, and the HSPiP distances for four known types of lubricants as the various types of lubricants.

The estimation equation storage unit 1150 temporarily stores the estimation equation into which the weight coefficients $\alpha$ and $\beta$ calculated by the coefficient calculation unit 1140 are substituted. Here, the estimation equation temporarily stored in the estimation equation storage unit 1150 is transmitted to the selection device 230 and stored in the selection device 230 so as to be executable.

<Flow of Hypothesis Verification Process Performed by Verification Device>

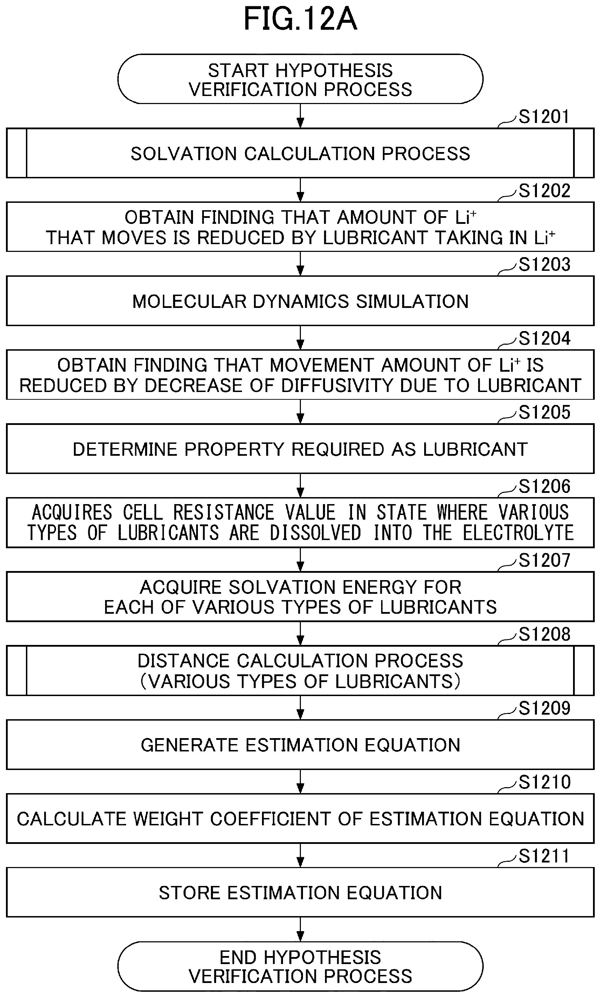

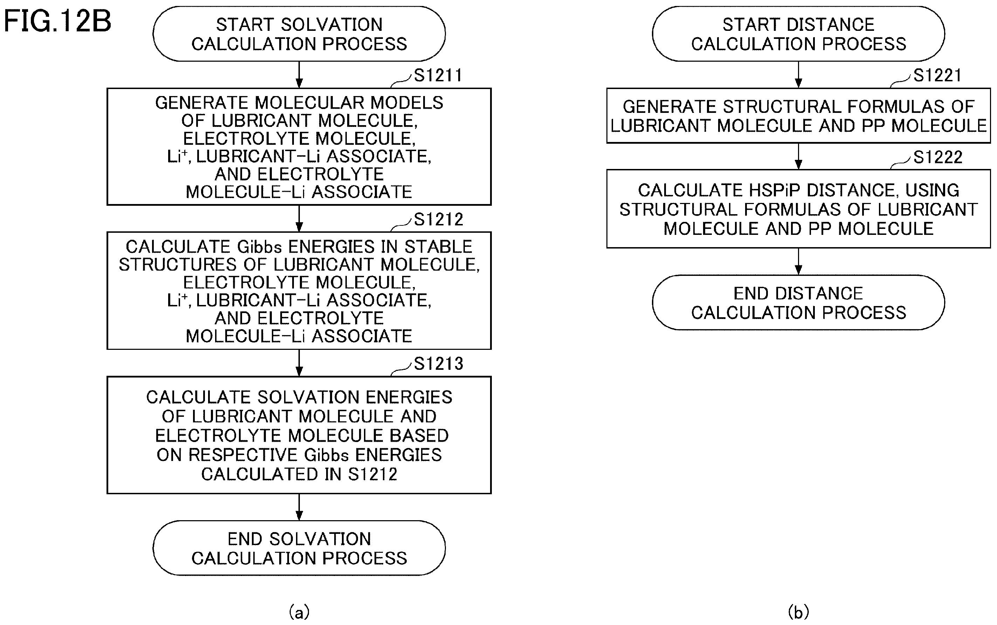

Next, a flow of the hypothesis verification process (step S403) by the verification device 220 will be described with reference to FIGS. 12A and 12B. FIG. 12A is a flowchart illustrating the flow of hypothesis verification process. FIG. 12B is a flowchart illustrating flows of solvation calculation process and distance calculation process.

(1) Flow of Hypothesis verification process

In step S1201 of FIG. 12A, the verification device 220 performs the solvation calculation process to calculate the solvation energy of the current lubricant and the solvation energy of the electrolyte molecule.
In step S1202, the verification device 220 compares the calculation results of the solvation energy. With this, the verification device 220 verifies Hypothesis 1 that the lubricant dissolved in the electrolyte solution is more likely to take in Li+ (lithium cation) than the electrolyte molecule (EMC and EC) contained in the electrolyte solution. As a result, it is found that, in the electrolyte solution of the lithium-ion battery, the amount of Li+ (lithium cation) that can freely move in the electrolyte solution decreases because the lubricant takes in Li+ (lithium ion).
In step S1203, the verification device 220 calculates the diffusion constant of Li+ (lithium cation) with and without the lubricant by performing the molecular dynamics simulation.
In step S1204, the verification device 220 compares the calculation results of the diffusion constant between the case with the lubricant and the case without the lubricant. With this, the verification device 220 verifies Hypothesis 2 that the diffusivity of Li+ (lithium cation) in the electrolyte decreases by the lubricant dissolving in the electrolyte. As a result, it is found that, in the electrolyte of the lithium-ion battery, the movement amount of Li+ (lithium cation) that can move in the electrolyte decreases by the lubricant preventing Li+ (lithium cation) from moving freely in the electrolyte.
In step S1205, the verifier identifies that:

- the solvation energy is small in comparison with electrolyte molecule (EMC and EC); and
- the HSPiP distance between the lubricant and the CPP is distant,

as the property required for the lubricant to suppress the influence on the battery performance of the lithium-ion battery.
In step S1206, the verification device 220 acquires the cell resistance values measured in a state where various types of lubricants dissolve into the electrolyte.
In step S1207, the verification device 220 acquires the solvation energies calculated for each of various types of lubricants.
In step S1208, the verification device 220 performs the distance calculation process to calculate the HSPiP distances between the CPP and various types of lubricants.
In step S1209, the verification device 220 generates the estimation equation for selecting a lubricant based on the property of the lubricant required to suppress the influence on the battery performance of the lithium-ion battery.
In step S1210, the verification device 220 calculates the weight coefficient of the generated estimation equation, using the experimental value of cell resistance value, the solvation energy, and the HSPiP distance obtained or calculated in steps S1206 to S1208.
In step S1211, the verification device 220 derives the estimation equation by substituting the calculated weight coefficient and stores it in the selection device 230.

(2) Flow of Solvation Calculation Process

Next, the solvation calculation process (step S1201) will be described in detail.
In step S1211 of (a) of FIG. 12B, the verification device 220 generates molecular models of the lubricant molecule of the current lubricant, the electrolyte molecule, Li+ (lithium cation), the lubricant and Li associate, and the electrolyte molecule and Li associate.
In step S1212, the verification device 220 calculates the Gibbs energies in the stable structures of the generated molecular models of the lubricant molecule, the electrolyte molecule, Li+ (lithium cation), the lubricant and Li associate, and the electrolyte molecule and Li associate.
In step S1213, the verification device 220 calculates the solvation energy of the lubricant and the solvation energy of the electrolyte molecule based on the Gibbs energy calculated in step S1212 (Equation 1 described above).

(3) Flow of Distance Calculation Process

Next, the distance calculation process (step S1208) will be described in detail.

In step S1221 of (b) of FIG. 12B, the verification device 220 generates structural formulas of the lubricant molecule and the PP molecule.

In step S1222, the verification device 220 calculates the solubility parameter of Hansen using the Kekule structural formulas of the PP molecule and the lubricant molecule to calculate the HSPiP distance. For example, when the solubility parameter of Hansen for the lubricant molecule is ($\delta$D, $\delta$P, $\delta$H) and the solubility parameter of Hansen for the PP molecule is ($\delta D_{PP}$, $\delta P_{PP}$, $\delta H_{PP}$), the verification device 220 calculates the HSPiP distance d using the following equation.

[Equation 2]

$$\text{HSPiP DISTANCE d} = \sqrt{4 \times (\delta D - \delta D_{PP})^2 + (\delta P - \delta P_{PP})^2 + (\delta H - \delta H_{PP})^2} \cdots (\text{EQUATION 2})$$

<Functional Configuration of Selection Device>

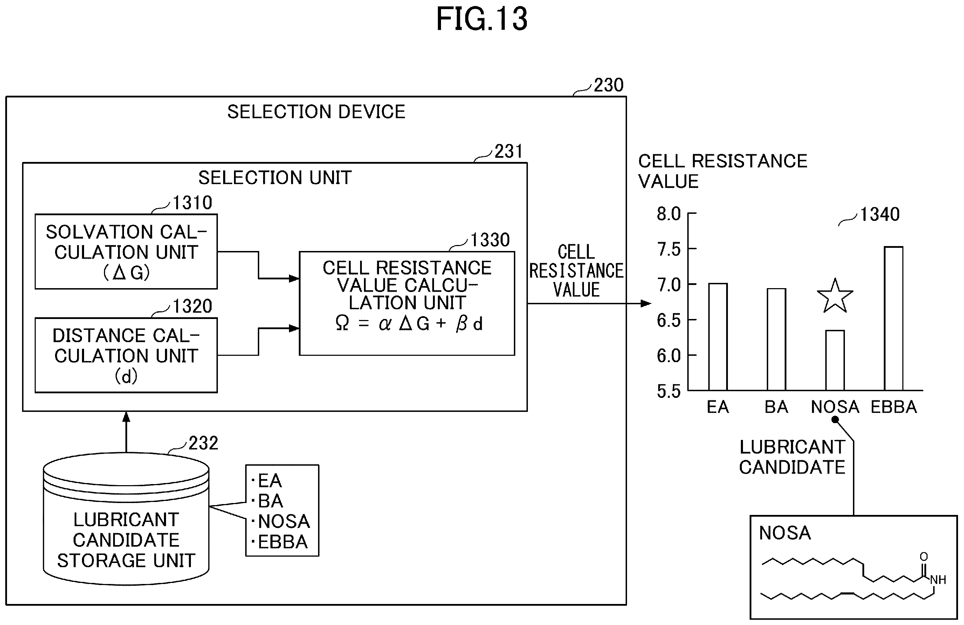

Next, a functional configuration of the selection unit 231 of the selection device 230 will be described. FIG. 13 is a diagram illustrating an example of the functional configuration of the selection unit.

As illustrated in FIG. 13, the selection unit 231 includes a solvation calculation unit 1310, a distance calculation unit 1320, and a cell resistance value calculation unit 1330.

The solvation calculation unit 1310 is an example of a first calculation unit, reads a lubricant candidate from the lubricant candidate storage unit 232, and calculates the solvation energy for the read lubricant candidate. Additionally, the solvation calculation unit 1310 notifies the cell resistance value calculation unit 1330 of the calculated solvation energy.

The distance calculation unit 1320 is an example of a second calculation unit, reads a lubricant candidate from the lubricant candidate storage unit 232, and calculates the HSPiP distance between the read lubricant candidate and the CPP. Additionally, the distance calculation unit 1320 notifies the cell resistance value calculation unit 1330 of the calculated HSPiP distance.

The cell resistance value calculation unit 1330 is an example of a prediction unit. The cell resistance value calculation unit 1330 calculates the cell resistance value by using the estimation equation derived by the verification device 220. Specifically, the cell resistance value calculation unit 1330 inputs the solvation energy notified by the solvation calculation unit 1310 and the HSPiP distance notified by the distance calculation unit 1320 into the estimation equation to calculate the cell resistance value for each of the lubricant candidates.

The example illustrated in FIG. 13 indicates a state in which the cell resistance is calculated for:

- "EA" (erucic acid amide),
- "BA" (behenic acid amide),
- "NOSA" (N-oleylstearic acid amide), and
- "EBBA" (N-(4 methoxybenzylidene) -4 butylaniline), as the lubricant candidates.

As indicated by reference numeral 1340 in FIG. 13, among the lubricant candidates, "NOSA" (N-oleyl stearic acid amide) was found to have the smallest cell resistance value.

<Flow of Selection Process>

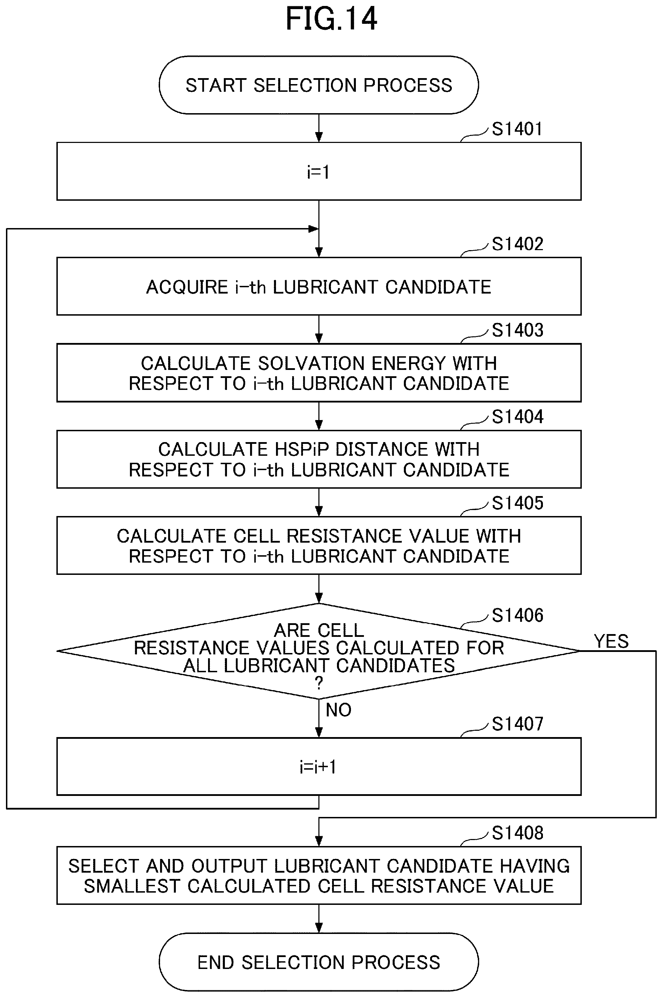

Next, a flow of selection process (step S404) performed by the selection device 230 will be described. FIG. 14 is a flowchart illustrating the flow of selection process.

In step S1401, the selection device 230 inputs "1" into the counter i for counting the lubricant candidates.

In step S1402, the selection device 230 acquires the i-th lubricant candidate.

In step S1403, the selection device 230 calculates the solvation energy of the acquired i-th lubricant candidate.

In step S1404, the selection device 230 calculates the HSPiP distance between the obtained i-th lubricant candidate and the CPP.

In step S1405, the selection device 230 calculates the cell resistance value of the acquired i-th lubricant candidate based on the solvation energy and the HSPiP distance.

In step S1406, the selection device 230 determines whether the cell resistance value has been calculated for all the lubricant candidates. If it is determined in step S1406 that there is a lubricant candidate for which the cell resistance value has not yet been calculated (NO in step S1406), the process proceeds to step S1407.

In step S1407, the selection device 230 increments the counter i for counting the lubricant candidates, and the process returns to step S1402.

If it is determined in step S1406 that the cell resistance values have been calculated for all the lubricant candidates (YES in step S1406), the process proceeds to step S1408.

In step S1408, the selection device 230 selects a lubricant candidate having the smallest calculated cell resistance value, and outputs the selection result.

<Process after Selection>

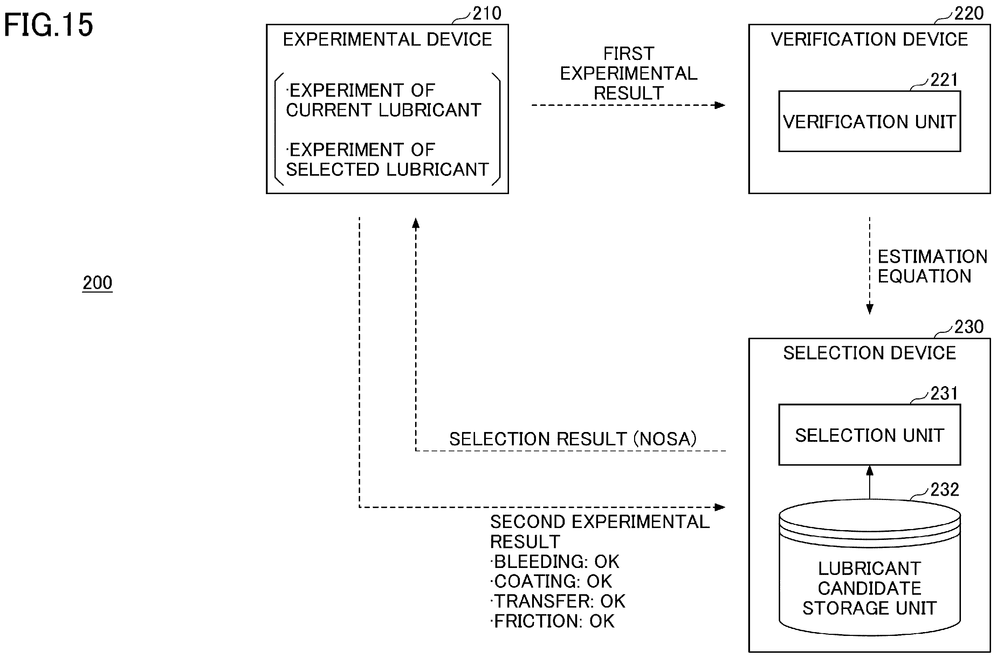

A process after the lubricant selection in the lubricant selection system 200 will be described. FIG. 15 is a diagram for explaining the process after the selection. The example in FIG. 15 indicates a case where the selection result obtained by the selection device 230 is "NOSA".

As illustrated in FIG. 15, the selection result obtained by the selection device 230 is notified to the experimental device 210. The experimental device 210 performs an experiment to measure the properties of the composite material when "NOSA", which is the newly selected lubricant, is added to the CPP.

The example in FIG. 15 indicates a state in which bleeding, coating, transfer, and friction are measured as the properties of the composite material, and the desired properties are obtained in all of them.

<Summary>

As is clear from the above description, the lubricant selection system 200 according to the first embodiment is a system configured to select a lubricant to be added to the resin film of the composite material used as the exterior material of a lithium-ion battery and is configured to:

- • calculate the solvation energy between the lubricant candidate and the lithium cation;
- calculate the HSPiP distance between the CPP and the lubricant candidate; and
- predict the cell resistance value of the lithium-ion battery based on the calculated solvation energy and HSPiP distance.

With this, the lubricant selection system 200 according to the first embodiment can predict the cell resistance value of the lithium-ion battery when each of the lubricant candidates dissolves into the electrolyte of the lithium-ion battery.

As a result, the lubricant selection system 200 according to the first embodiment can select a lubricant that suppresses the influence on the cell resistance value of the lithium-ion battery.

[Second Embodiment]

In the first embodiment, the relationship between the solvation energy acquired by the solvation energy acquisition unit 1120, the HSPiP distance calculated by the distance calculation unit 1130, and the cell resistance value is approximated by a linear expression, and a weighted sum thereof is performed. However, the expression for approximating the relationship between the solvation energy acquired by the solvation energy acquisition unit 1120, the HSPiP distance calculated by the distance calculation unit 1130, and the cell resistance value is not limited to a linear expression, and may be approximated by using a quadratic or higher-order equation.

Additionally, the first embodiment described above is configured to select and output the lubricant candidate having the smallest calculated cell resistance value. However, the method for outputting the lubricant candidate is not limited to this, and may be configured to output a list of cell resistance values for all of the plurality of lubricant candidates such that the selector can select the lubricant. Alternatively, the method may be configured to select and output the top m lubricant candidates having the smallest calculated cell resistance value. In this case, the method is configured such that the selector sets the number m of lubricant candidates to be output.

Additionally, in the first embodiment described above, the case where the cell resistance value is used as the degree of influence on the battery performance of the lithium-ion battery is described. However, the degree of influence on the battery performance of the lithium-ion battery is not limited to the cell resistance value and may be, for example, the discharge capacity retention rate.

Additionally, in the first embodiment described above, the verification device 220 and the selection device 230 are configured as separate devices, but the verification device 220 and the selection device 230 may be configured as an integrated device. Alternatively, some functions of the verification device 220 may be implemented in the selection device 230, and some functions of the selection device 230 may be implemented in the verification device 220.

Here, the present invention is not limited to the configuration illustrated here, such as the configuration listed in the above embodiments and the combination with other elements. These points may be modified to the extent that they do not deviate from the spirit of the present invention, and may be appropriately specified according to the application form.

**EP 4 632 887 A1**

This application claims priority to Japanese Patent Application No. 2022-194750, filed on December 6, 2022, the entire contents of which are incorporated herein by reference.

Description of reference numerals

| | |
|---|---|
| 110 : | composite material |
| 120 : | exterior material |
| 200 : | lubricant selection system |
| 210 : | experimental device |
| 220 : | verification device |
| 221 : | verification unit |
| 230 : | selection device |
| 231 : | selection unit |
| 810 : | solvation calculation unit |
| 820 : | molecular dynamics calculation unit |
| 830 : | estimation equation derivation unit |
| 1010 : | thermal acceleration calculation unit |
| 1020 : | first adjustment unit |
| 1030 : | second adjustment unit |
| 1040 : | simulation unit |
| 1110 : | cell resistance value acquisition unit |
| 1120 : | solvation energy acquisition unit |
| 1130 : | distance calculation unit |
| 1140 : | coefficient calculation unit |
| 1150 : | estimation equation storage unit |
| 1310 : | solvation calculation unit |
| 1320 : | distance calculation unit |
| 1330 : | cell resistance value calculation unit |

**Claims**

1. A lubricant selection system for selecting a lubricant to be added to a resin film of a composite material used as an exterior material of a lithium-ion battery, the lubricant selection system comprising:

    a first calculation unit configured to calculate a solvation energy between a lubricant candidate and a lithium cation;
    a second calculation unit configured to calculate a distance between the resin film and the lubricant candidate in an interaction space; and
    a prediction unit configured to predict a degree of influence of the lubricant candidate on battery performance of the lithium-ion battery based on the solvation energy calculated by the first calculation unit and the distance calculated by the second calculation unit.

2. The lubricant selection system as claimed in claim 1, wherein the prediction unit predicts the degree of influence of the lubricant candidate on the battery performance of the lithium-ion battery by using an estimation equation derived based on the degree of influence on the battery performance of the lithium-ion battery measured in a state in which each of a plurality of lubricants dissolves into an electrolyte of the lithium-ion battery, the solvation energy between each of the plurality of lubricants and the lithium cation, and the distance in the interaction space between the resin film and each of the plurality of lubricants.

3. The lubricant selection system as claimed in claim 2, wherein the prediction unit predicts the degree of influence of the lubricant candidate on the battery performance of the lithium-ion battery by inputting, into the estimation equation, the solvation energy calculated by the first calculation unit and the distance calculated by the second calculation unit.

4. The lubricant selection system as claimed in claim 3, wherein the estimation equation predicts the degree of influence of the lubricant candidate on the battery performance of the lithium-ion battery by performing a weighted sum of the solvation energy calculated by the first calculation unit and the distance calculated by the second calculation unit.

5. The lubricant selection system as claimed in any one of claims 1 to 4, wherein the second calculation unit calculates the distance between the resin film and the lubricant candidate in the interaction space defined by a van der Waals force interaction, a molecular polarity interaction, and a hydrogen bond interaction.

6. The lubricant selection system as claimed in any one of claims 2 to 4, wherein the electrolyte contains one of ethylene carbon or ethyl methyl carbon, or more, as an electrolyte molecule.

7. The lubricant selection system as claimed in any one of claims 1 to 6, wherein the prediction unit predicts a cell resistance value as the battery performance of the lithium-ion battery for each of a plurality of lubricant candidates.

8. The lubricant selection system as claimed in claim 7, further comprising a selection unit configured to select a lubricant candidate having a smallest cell resistance value from the cell resistance value predicted by the prediction unit for each of the plurality of lubricant candidates.

9. A lubricant selection method for selecting a lubricant to be added to a resin film of a composite material used as an exterior material of a lithium-ion battery, the lubricant selection method comprising:

   a first calculation step of calculating, by a computer, a solvation energy between a lubricant candidate and a lithium cation;
   a second calculation step of calculating, by the computer, a distance between the resin film and the lubricant candidate in an interaction space; and
   a prediction step of predicting, by the computer, a degree of influence of the lubricant candidate on battery performance of the lithium-ion battery based on the solvation energy calculated by the first calculation step and the distance calculated by the second calculation step.

10. A lubricant selection program causing a computer of a selection device configured to select a lubricant to be added to a resin film of a composite material used as an exterior material of a lithium-ion battery to perform:

   a first calculation step of calculating a solvation energy between a lubricant candidate and a lithium cation;
   a second calculation step of calculating a distance between the resin film and the lubricant candidate in an interaction space; and
   a prediction step of predicting a degree of influence of the lubricant candidate on battery performance of the lithium-ion battery based on the solvation energy calculated by the first calculation step and the distance calculated by the second calculation step.

11. The lubricant selected by the lubricant selection system as claimed in any one of claims 1 to 8, and added to the resin film in the composite material in which aluminum foil and the resin film are bonded.

12. The composite material in which the resin film to which the lubricant as claimed in claim 11 is added and the aluminum foil are bonded together.

FIG.1

110

PROCESS

120

OUTER SIDE

OUTER SIDE

111

PET

ALUMINUM FOIL

CPP

LUBRICATION LAYER

} RESIN FILM

121

PET

ALUMINUM FOIL

CPP

LUBRICATION LAYER

112

PET

ALUMINUM FOIL

CPP

LUBRICATION LAYER

122

ELECTROLYTE SOLUTION OF LITHIUM-ION BATTERY

INNER SIDE

INNER SIDE

EP 4 632 887 A1

# FIG.2

200

**220 VERIFICATION DEVICE**
- 221 VERIFICATION UNIT

**230 SELECTION DEVICE**
- 231 SELECTION UNIT
- 232 LUBRICANT CANDIDATE STORAGE UNIT

**210 EXPERIMENTAL DEVICE**
- EXPERIMENT OF CURRENT LUBRICANT
- EXPERIMENT OF SELECTED LUBRICANT

ESTIMATION EQUATION

FIRST EXPERIMENTAL RESULT

SELECTION RESULT

SECOND EXPERIMENTAL RESULT

# FIG.3

VERIFICATION DEVICE AND SELECTION DEVICE — 220, 230

| 301 PROCESSOR | 302 MEMORY | 303 AUXILIARY STORAGE DEVICE |

— 307

| 304 I/F DEVICE | 305 COMMUNICATION DEVICE | 306 DRIVE DEVICE |

311 OPERATION DEVICE

312 DISPLAY DEVICE

313 RECORDING MEDIUM

EP 4 632 887 A1

# FIG.4

START
LUBRICANT SELECTION PROCESS

S401

EXPERIMENT TO DETERMINE DEGREE
OF INFLUENCE OF CURRENT
LUBRICANT ON LITHIUM-ION BATTERY

S402

EXAMINE HYPOTHESIS ABOUT PHENOMENON

S403

HYPOTHESIS VERIFICATION PROCESS

S404

SELECTION PROCESS

S405

MEASURE PROPERTY OF
COMPOSITE MATERIAL WHEN NEWLY
SELECTED LUBRICANT IS ADDED

S406

IS PREDETERMINED
CONDITION SATISFIED?

NO

YES

END
LUBRICANT SELECTION PROCESS

FIG.5

# FIG.6

INFLUENCE OF LUBRICANT

CRIMSON LINE (D1)
OCHER LINE (D2)
SKY BLUE LINE (B2)
BLUE LINE (B1)

LUBRICANT 1.0 g

LUBRICANT 1.5 g

GREEN LINE (A1)
YELLOW-GREEN LINE (A2)
PEACH LINE (C2)
RED LINE (C1)

DISCHARGE CAPACITY RETENTION RATE [%]

CYCLE

A1   A2
B1   B2
C1   C2
D1   D2

EP 4 632 887 A1

# FIG.7

LUBRICANT    EMC    EC    Li$^+$

EP 4 632 887 A1

# FIG.8

VERIFICATION DEVICE — 220

VERIFICATION UNIT — 221

SOLVATION CALCULATION UNIT — 810

MOLECULAR DYNAMICS CALCULATION UNIT — 820

ESTIMATION EQUATION DERIVATION UNIT — 830

# FIG.9

SOLVATION CALCULATION UNIT — 810

Li⁺

LUBRICANT MOLECULE (EA) →

ELECTROLYTE MOLECULE 1 (EMC) →

ELECTROLYTE MOLECULE 2 (EC) →

910

$$\Delta G = (G \text{ OF COMPLEX WITH Li}) - (G \text{ OF EACH MOLECULE AND ION})$$

→ SOLVATION ENERGY OF LUBRICANT MOLECULE (EA)

→ SOLVATION ENERGY OF ELECTROLYTE MOLECULE 1 (EMC)

→ SOLVATION ENERGY OF ELECTROLYTE MOLECULE 2 (EC)

920

LUBRICANT MOLECULE

ELECTROLYTE MOLECULE 2

ELECTROLYTE MOLECULE 1

−48  −46  −44  −42  −40  −38  −36

SOLVATION ENERGY (△G)

EP 4 632 887 A1

EP 4 632 887 A1

**FIG.10**

# FIG.11

ESTIMATION EQUATION DERIVATION UNIT ~830

CELL RESISTANCE VALUE ACQUISITION UNIT ($\Omega$) ~1110

SOLVATION ENERGY ACQUISITION UNIT ($\Delta G$) ~1120

DISTANCE CALCULATION UNIT (d) ~1130

COEFFICIENT CALCULATION UNIT ($\alpha$, $\beta$) ~1140

ESTIMATION EQUATION STORAGE UNIT
$\Omega = \alpha \Delta G + \beta d$ ~1150

~1160

~1170

dP

dD

d$\otimes$

PP

LUBRICANT

dH

$R^2 = 0.9673$

FITTING EQUATION

7.5
7.4
7.3
7.2
7.1
7.0
6.9
6.8

6.5   7.0   7.5

CELL RESISTANCE VALUE
(EXPERIMENTAL VALUE)

EP 4 632 887 A1

# FIG.12A

```
        ┌─────────────────────────────┐
        │      START HYPOTHESIS       │
        │     VERIFICATION PROCESS    │
        └─────────────────────────────┘
                      │            ⟋S1201
        ┌─────────────────────────────────────┐
        │  SOLVATION CALCULATION PROCESS      │
        └─────────────────────────────────────┘
                      │            ⟋S1202
        ┌─────────────────────────────────────┐
        │  OBTAIN FINDING THAT AMOUNT OF Li+  │
        │ THAT MOVES IS REDUCED BY LUBRICANT  │
        │            TAKING IN Li+            │
        └─────────────────────────────────────┘
                      │            ⟋S1203
        ┌─────────────────────────────────────┐
        │  MOLECULAR DYNAMICS SIMULATION      │
        └─────────────────────────────────────┘
                      │            ⟋S1204
        ┌─────────────────────────────────────┐
        │ OBTAIN FINDING THAT MOVEMENT        │
        │ AMOUNT OF Li+ IS REDUCED BY         │
        │ DECREASE OF DIFFUSIVITY DUE TO      │
        │ LUBRICANT                           │
        └─────────────────────────────────────┘
                      │            ⟋S1205
        ┌─────────────────────────────────────┐
        │ DETERMINE PROPERTY REQUIRED AS      │
        │ LUBRICANT                           │
        └─────────────────────────────────────┘
                      │            ⟋S1206
        ┌─────────────────────────────────────┐
        │ ACQUIRES CELL RESISTANCE VALUE IN   │
        │ STATE WHERE VARIOUS TYPES OF        │
        │ LUBRICANTS ARE DISSOLVED INTO THE   │
        │ ELECTROLYTE                         │
        └─────────────────────────────────────┘
                      │            ⟋S1207
        ┌─────────────────────────────────────┐
        │ ACQUIRE SOLVATION ENERGY FOR        │
        │ EACH OF VARIOUS TYPES OF LUBRICANTS │
        └─────────────────────────────────────┘
                      │            ⟋S1208
        ┌─────────────────────────────────────┐
        │  DISTANCE CALCULATION PROCESS       │
        │  (VARIOUS TYPES OF LUBRICANTS)      │
        └─────────────────────────────────────┘
                      │            ⟋S1209
        ┌─────────────────────────────────────┐
        │  GENERATE ESTIMATION EQUATION       │
        └─────────────────────────────────────┘
                      │            ⟋S1210
        ┌─────────────────────────────────────┐
        │ CALCULATE WEIGHT COEFFICIENT OF     │
        │ ESTIMATION EQUATION                 │
        └─────────────────────────────────────┘
                      │            ⟋S1211
        ┌─────────────────────────────────────┐
        │  STORE ESTIMATION EQUATION          │
        └─────────────────────────────────────┘
                      │
        ┌─────────────────────────────┐
        │      END HYPOTHESIS         │
        │     VERIFICATION PROCESS    │
        └─────────────────────────────┘
```

**FIG.12B**

```
┌─────────────────────────┐
│     START SOLVATION     │
│   CALCULATION PROCESS   │
└─────────────────────────┘
            │  S1211
            ▼
┌─────────────────────────┐
│ GENERATE MOLECULAR MODELS│
│    OF LUBRICANT MOLECULE,│
│      ELECTROLYTE MOLECULE,│
│  Li⁺, LUBRICANT-Li ASSOCIATE,│
│       AND ELECTROLYTE    │
│   MOLECULE-Li ASSOCIATE  │
└─────────────────────────┘
            │  S1212
            ▼
┌─────────────────────────┐
│ CALCULATE Gibbs ENERGIES IN STABLE│
│ STRUCTURES OF LUBRICANT MOLECULE,│
│      ELECTROLYTE MOLECULE,│
│  Li⁺, LUBRICANT-Li ASSOCIATE,│
│       AND ELECTROLYTE    │
│   MOLECULE-Li ASSOCIATE  │
└─────────────────────────┘
            │  S1213
            ▼
┌─────────────────────────┐
│ CALCULATE SOLVATION ENERGIES│
│  OF LUBRICANT MOLECULE AND│
│ ELECTROLYTE MOLECULE BASED│
│  ON RESPECTIVE Gibbs ENERGIES│
│    CALCULATED IN S1212   │
└─────────────────────────┘
            │
            ▼
┌─────────────────────────┐
│      END SOLVATION      │
│   CALCULATION PROCESS   │
└─────────────────────────┘
```

(a)

```
┌─────────────────────────┐
│     START DISTANCE      │
│   CALCULATION PROCESS   │
└─────────────────────────┘
            │  S1221
            ▼
┌─────────────────────────┐
│ GENERATE STRUCTURAL FORMULAS OF│
│ LUBRICANT MOLECULE AND PP MOLECULE│
└─────────────────────────┘
            │  S1222
            ▼
┌─────────────────────────┐
│ CALCULATE HSPiP DISTANCE, USING│
│ STRUCTURAL FORMULAS OF LUBRICANT│
│   MOLECULE AND PP MOLECULE│
└─────────────────────────┘
            │
            ▼
┌─────────────────────────┐
│      END DISTANCE       │
│   CALCULATION PROCESS   │
└─────────────────────────┘
```

(b)

# FIG.13

# FIG.14

```
        ┌──────────────────────────┐
        │  START SELECTION PROCESS  │
        └──────────────────────────┘
                     │
                     ▼                          ⟋S1401
  ┌──────────────────────────────────────────────┐
  │                    i=1                         │
  └──────────────────────────────────────────────┘
                     │
                     ▼                          ⟋S1402
  ┌──────────────────────────────────────────────┐
  │        ACQUIRE i-th LUBRICANT CANDIDATE        │
  └──────────────────────────────────────────────┘
                     │
                     ▼                          ⟋S1403
  ┌──────────────────────────────────────────────┐
  │       CALCULATE SOLVATION ENERGY WITH          │
  │      RESPECT TO i-th LUBRICANT CANDIDATE       │
  └──────────────────────────────────────────────┘
                     │
                     ▼                          ⟋S1404
  ┌──────────────────────────────────────────────┐
  │        CALCULATE HSPiP DISTANCE WITH           │
  │      RESPECT TO i-th LUBRICANT CANDIDATE       │
  └──────────────────────────────────────────────┘
                     │
                     ▼                          ⟋S1405
  ┌──────────────────────────────────────────────┐
  │     CALCULATE CELL RESISTANCE VALUE WITH       │
  │      RESPECT TO i-th LUBRICANT CANDIDATE       │
  └──────────────────────────────────────────────┘
                     │
                     ▼                          ⟋S1406
            ◇ ARE CELL                          YES
   RESISTANCE VALUES CALCULATED FOR ─────────────▶
     ALL LUBRICANT CANDIDATES ◇
                     │ NO
                     ▼                          ⟋S1407
  ┌──────────────────────────────────────────────┐
  │                   i=i+1                        │
  └──────────────────────────────────────────────┘
                     │
                     ▼                          ⟋S1408
  ┌──────────────────────────────────────────────┐
  │ SELECT AND OUTPUT LUBRICANT CANDIDATE HAVING   │
  │ SMALLEST CALCULATED CELL RESISTANCE VALUE      │
  └──────────────────────────────────────────────┘
                     │
                     ▼
        ┌──────────────────────────┐
        │   END SELECTION PROCESS   │
        └──────────────────────────┘
```

# FIG.15

200

EXPERIMENTAL DEVICE 210

- EXPERIMENT OF CURRENT LUBRICANT
- EXPERIMENT OF SELECTED LUBRICANT

FIRST EXPERIMENTAL RESULT →

VERIFICATION DEVICE 220

VERIFICATION UNIT 221

ESTIMATION EQUATION

SELECTION DEVICE 230

SELECTION UNIT 231

LUBRICANT CANDIDATE STORAGE UNIT 232

SELECTION RESULT (NOSA)

SECOND EXPERIMENTAL RESULT
- BLEEDING: OK
- COATING: OK
- TRANSFER: OK
- FRICTION: OK

EP 4 632 887 A1

# EP 4 632 887 A1

## INTERNATIONAL SEARCH REPORT

| | International application No. |
|---|---|
| | **PCT/JP2023/042261** |

**A. CLASSIFICATION OF SUBJECT MATTER**

***H01M 50/121***(2021.01)i; ***H01M 50/105***(2021.01)i; ***H01M 50/119***(2021.01)i; ***H01M 50/124***(2021.01)i
FI:   H01M50/121; H01M50/105; H01M50/119; H01M50/124

According to International Patent Classification (IPC) or to both national classification and IPC

**B. FIELDS SEARCHED**

Minimum documentation searched (classification system followed by classification symbols)

H01M50/121; H01M50/105; H01M50/119; H01M50/124

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-16537 A (DAI NIPPON PRINTING CO., LTD.) 31 January 2019 (2019-01-31) claims 1-3, paragraphs [0016]-[0025], [0039], [0063]-[0075], [0106]-[0108] | 11-12 |
| A | | 1-10 |
| X | JP 2012-104248 A (TORAY ADVANCED FILM CO., LTD.) 31 May 2012 (2012-05-31) claim 1, paragraphs [0001]-[0009], [0048]-[0115] | 11-12 |
| A | | 1-10 |
| A | JP 2021-176131 A (DAIKIN IND., LTD.) 04 November 2021 (2021-11-04) | 1-12 |
| A | JP 2019-102187 A (KANEKA CORP.) 24 June 2019 (2019-06-24) | 1-12 |
| A | US 2012/0130691 A1 (LI, Jun) 24 May 2012 (2012-05-24) | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

33

**INTERNATIONAL SEARCH REPORT**
Information on patent family members

International application No.

**PCT/JP2023/042261**

| Patent document cited in search report | | | Publication date (day/month/year) | Patent family member(s) | Publication date (day/month/year) |
|---|---|---|---|---|---|
| JP | 2019-16537 | A | 31 January 2019 | (Family: none) | |
| JP | 2012-104248 | A | 31 May 2012 | (Family: none) | |
| JP | 2021-176131 | A | 04 November 2021 | (Family: none) | |
| JP | 2019-102187 | A | 24 June 2019 | (Family: none) | |
| US | 2012/0130691 | A1 | 24 May 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018181667 A
- JP 2021176131 A
- WO 2016136640 A
- JP 2022194750 A